# EUROPÄISCHE PATENTSCHRIFT

(11) **EP 2 038 626 B1**
(45) Veröffentlichungstag und Bekanntmachung des Hinweises auf die Patenterteilung: **06.10.2010**
(21) Anmeldenummer: 07785952.8
(22) Anmeldetag: 09.07.2007
(51) Int. Cl.: G01L 1/24, E05F 15/00

(54) **SENSORSYSTEM UND SENSORELEMENT SOWIE VERFAHREN ZUM ÜBERWACHEN EINES SCHLIEßMECHANISMUS**
SENSOR SYSTEM, SENSOR ELEMENT, AND METHOD FOR MONITORING A CLOSING MECHANISM
SYSTÈME DÉTECTEUR ET ÉLÉMENT DÉTECTEUR ET PROCÉDÉ DE SURVEILLANCE D'UN MÉCANISME DE FERMETURE

(30) Priorität: 07.07.2006 DE 102006031812
(43) Veröffentlichungstag der Anmeldung: 25.03.2009
(73) Patentinhaber: Leoni AG, 90402 Nürnberg (DE)
(72) Erfinder: REICHINGER, Gerhard, 91126 Rednitzhembach (DE); KODL, Georg, 90403 Nürnberg (DE); FROMMBERGER, Michael, 90411 Nürnberg (DE); WEISS, Christoph, 90530 Wendelstein (DE); VOSBURGH, Keith, A., 48327 Waterford, Michigan (US); YUGE, Masaaki, 680-6 Noba-cho, Konan-ku, Yokohama-shi, Kanagawa 234-0056 (JP)
(74) Vertreter: Tergau & Pohl Patentanwälte
(86) Internationale Anmeldenummer: PCT/EP2007/006081
(87) Internationale Veröffentlichungsnummer: WO 2008/003521

(56) Entgegenhaltungen:
- EP-A- 0 648 628
- EP-A- 1 455 044
- DE-A1- 4 416 803
- DE-A1-102004 029 842
- US-A- 5 027 552

## Beschreibung

Die Erfindung betrifft ein Sensorsystem mit den Merkmalen des Oberbegriffs des Anspruchs 1 insbesondere zur Überwachung eines motorisch angetriebenen Schließmechanismus im Hinblick auf ein Einklemmen eines Gegenstands zwischen zwei relativ zueinander bewegten Teilen des Schließmechanismus. Die Erfindung betrifft weiterhin ein Verfahren zur Überwachung eines Schließmechanismus mit einem derartigen Sensorsystem.

Bei motorisch angetriebenen Schließmechanismen, wie sie insbesondere in der Kraftfahrzeugindustrie, beispielsweise als elektromotorisch betätigte Fensterheber, Schiebetüren, Heckklappen, Schiebedächer, etc. eingesetzt werden, muss aus Sicherheitsgründen ein Einklemmschutz vorgesehen sein. Mit einem Einklemmschutz-System wird das Verletzungsrisiko minimiert, falls unbeabsichtigt ein Körperteil einer Person in den Verfahrweg eines motorisch angetriebenen Schließelements, beispielsweise Fensterscheibe oder Tür etc. gelangt und gegen beispielsweise die Karosserie geklemmt wird. In einem derartigen Einklemmfall muss ein schnelles Abschalten des Antriebsmotors erfolgen, um einer Verletzung vorzubeugen. Hierzu ist erforderlich, dass das Schließsystem den Einklemmfall als solches erkennt und daraufhin den Antriebsmotor stoppt.

Zur Erfassung des Einklemmfalls kann ein Sensorelement vorgesehen sein, welches beispielsweise einen unzulässigen Druckanstieg erfasst. Es besteht hierbei jedoch das Problem, dass aufgrund des Verletzungsrisikos eine sichere Detektion eines Einklemmfalls gewährleistet sein muss.

Aus der DE 44 16 803 A1 ist ein Sensorsystem sowie ein Verfahren zur Überwachung eines motorisch angetriebenen Schließmechanismus, insbesondere Fensterhebersystem, zu entnehmen, bei dem eine redundante Auslegung des Sensorsystems vorgesehen ist. Hierbei wird unter anderem auch vorgeschlagen, einen berührungslos arbeitenden kapazitiven Sensor mit einem optischen Sensor in Form eines Lichtleiters zu kombinieren, der bei einer Dämpfung des Lichts infolge einer Deformation ein Signal erzeugt.

Der Erfindung liegt die Aufgabe zugrunde, eine sichere und zuverlässige Detektion insbesondere eines Einklemmfalls zu gewährleisten.

Die Aufgabe wird erfindungsgemäß gelöst durch ein Sensorsystem mit den Merkmalen des Patentanspruchs 1.

Das Sensorsystem weist hierbei einen optischen Drucksensor sowie parallel hierzu einen elektrischen, insbesondere kapazitiven Sensor auf. Sowohl optische Drucksensoren als auch kapazitive Sensoren und deren Aufbau sind an sich bekannt. So wird beispielsweise in der WO 03/069294 A1 ein optischer Drucksensor beschrieben, welcher vorzugsweise bei dem hier beschriebenen Sensorsystem eingesetzt wird. Der optische Sensor weist ein optisches Sensorelement mit einem lichtleitenden Element auf, wobei das optische Sensorelement gemeinsam mit einer Elektrode des kapazitiven Sensors in einem schlauchförmigen Mantel angeordnet ist.

Das Sensorsystem umfasst demnach zwei parallel und nebeneinander eingesetzte Sensoreinheiten, die jede für sich betrachtet in der Lage ist, einen Einklemmfall zu detektieren. Gleichzeitig beruhen die beiden Sensoreinheiten jedoch auf unterschiedlichen Auswerte- und Erfassungsprinzipien. Dabei ergänzen sich die Vorteile der beiden unterschiedlichen Erfassungsprinzipien in besonders vorteilhafter Weise, so dass ein sicheres und zuverlässiges Detektieren eines Einklemmfalls auch in ungünstigen Situationen sicher gewährleistet ist.

Der elektrische Sensor weist nämlich den Vorteil auf, dass er nach Art eines kapazitiven Näherungssensors ausgebildet sein kann und daher bereits einen Gegenstand erkennen kann, bevor dieser Gegenstand den Sensor selbst berührt. Es handelt sich hierbei also insbesondere um einen berührungslosen Sensor. Hierdurch besteht die Möglichkeit, frühzeitig, bevor also bereits der Gegenstand tatsächlich geklemmt ist, den Antriebsmotor abzuschalten. Allerdings ist in bestimmten Situationen ein zuverlässiges Abschalten mit einem derartigen elektrischen Sensor nicht immer gewährleistet. Wird beispielsweise bei einer Schiebetür mit einer Hand die Kante der Schiebetüre umklammert und fährt die Schiebetüre gegen einen Anschlag, an dem der elektrische Sensor angeordnet ist, so kann dieser die Hand als solche nicht erkennen. Sie ist für den Sensor nicht von der eigentlichen Kante der Schiebetür zu unterscheiden. Folglich wird der Sensor in diesem Fall nicht ansprechen.

In einem derartigen Fall ist jedoch ein zuverlässiges Ansprechen des optischen Drucksensors gewährleistet, da aufgrund der Hand ein Druck auf den optischen Sensor ausgeübt wird, welcher von diesem schnell und zuverlässig detektiert wird und zum Abschalten des Antriebsmotors führt. Zudem sind aufgrund des optischen Prinzips beim optischen Sensor Störeffekte beispielsweise aufgrund von elektromagnetischer Unverträglichkeit oder aufgrund von im Laufe der Zeit auftretenden Korrosionsproblemen etc. nicht zu befürchten. Um ein sicheres Abschalten zu gewährleisten ist üblicherweise für beide Sensortypen ein Einlernen vorgesehen, um normale Betriebszustände von unnormalen Betriebszuständen, bei denen ein Gegenstand eingeklemmt ist oder wird, zu unterscheiden. Insbesondere ist für derartige Sensorsysteme üblicherweise vorgesehen, dass die aktuelle Position des motorisch angetriebenen Verschließelements erfasst und bekannt ist, um entscheiden zu können, ob nunmehr das Schließelement selbst gegen den Anschlag fährt oder ob ein Gegenstand zwischen dem Schließelement und dem Anschlag vorliegt.

Bevorzugte Ausgestaltungen und Weiterbildungen sind in den abhängigen Ansprüchen niedergelegt.

Für den optischen Sensor wird hierbei vorzugsweise ein optisches Sensorelement mit einer optischen, claddingfreien Faser als lichtleitendes Element eingesetzt. Die optische Faser ist beispielsweise eine Glasfaser oder auch eine Kunststoff-Faser, die zur Lichtwellenleitung geeignet ist. Das lichtleitende Element ist allgemein von einer schlauchartigen, elastischen Umhüllung vorzugsweise aus Kunststoff oder Gummi umgeben. In dieser Umhüllung liegt die optische Faser vorzugsweise lose ein. Insbesondere stützt sich die Umhüllung allenfalls an einigen Abstützstellen an der optischen Faser ab, so dass ansonsten ein Zwischenraum zwischen dem Mantel und der optischen Faser gebildet ist.

Die claddingfreie optische Faser bildet zusammen mit dem sie umgebenden elastischen Umhüllung ein optisches Sensorelement, wie es in der WO 03/069294 beschrieben ist. Die Wirkungsweise dieses Sensorelements beruht auf einer Störung des so genannten Evanescent-Feldes. Das Evanescent-Feld bildet sich bei der Lichtausbreitung durch die optische Faser im Außenbereich direkt an der Grenzfläche der optischen Faser aus. Übliche optische Fasern sind gebildet durch einen Licht leitenden Kern und einen den Kern umgebendes Cladding, welches nach Art einer Beschichtung aufgebracht ist und als eine Reflexionsschicht wirkt, um eine möglichst hohe Reflexion an den Grenzflächen zwischen Kern und Cladding der sich in der optischen Faser ausbreitenden elektromagnetischen Welle zu gewährleisten. Wesentlich bei dem hier vorgesehenen optischen Sensorelement ist nunmehr, dass die optische Faser claddingfrei ist. Dies ermöglicht nämlich, dass bei einer Druckbeaufschlagung auf die äußere Umhüllung, diese gegen die optische Faser gepresst wird und somit das sich im Außenbereich an der Grenzfläche der optischen Faser ausbildende Evanescent-Feld stört. Diese Störung wird von einer geeigneten Auswerteeinheit erfasst und ausgewertet. Der Vorteil eines derartigen optischen Sensors ist in seinem sehr schnallen Ansprechen zu sehen, da eine Verbiegung der optischen Faser selbst nicht erforderlich ist. Vielmehr reicht bereits ein einfaches Berühren der optischen Faser durch die Umhüllung aus, um eine ausreichende Signaländerung detektieren zu können.

In einer ersten bevorzugten Ausführungsvariante ist die Umhüllung von einem schlauchartigen Mantel gebildet, der einen Hohlraum hat, in dem die Faser lose einliegt. Der Mantel ist vorzugsweise als ein Dichtelement, insbesondere Dichtprofil ausgebildet, welches beispielsweise als Türdichtung bei einem Kraftfahrzeug eingesetzt wird. Die optische Faser liegt also unmittelbar im Dichtprofil ein.

In einer alternativen Ausgestaltung ist die Umhüllung von einem Schutzschlauch gebildet, welcher durch den Mantel geführt ist. In diesem Fall ist das optische Sensorelement vorzugsweise eine vorgefertigte Baueinheit, welche anschließend in den Mantel beispielsweise durch einen Extrusionsvorgang oder auch durch seitliches Einlegen über einen Schlitz oder ein Einfädeln eingebracht wird.

Weiterhin ist zweckdienlicherweise vorgesehen, dass zumindest ein Draht, vorzugsweise mehrer Drähte, oder auch ein Geflecht bildende Drähte entlang dem lichtleitenden Element verlaufen und insbesondere um das lichtleitende Element beispielsweise helixförmig gewickelt sind. Diese Drähte bzw. dieses Drahtgeflecht bildet zugleich eine Elektrode für den elektrischen Sensor. Unter Umwicklung des lichtleitenden Elements wird hier sowohl eine direkte Umwicklung der optischen Faser innerhalb der Umhüllung als auch eine indirekte Umwicklung, also eine Umwicklung insbesondere des Schutzschlauchs innerhalb des Mantels verstanden.

Die Elektrode ist allgemein wesentlicher Bestandteil des elektrischen Sensors, der eine Veränderung des elektrischen Feldes mit Hilfe der Elektroden erfasst, sobald ein Gegenstand in die Nähe der Elektrode gelangt und somit das elektrisch Feld stört bzw. verändert. Diese Veränderung des elektrischen Feldes wird mit Hilfe des elektrischen Sensors in an sich bekannter Weise erfasst und detektiert.

Physikalisch handelt es sich beim elektrischen Sensor um ein Mehrleitersystem mit mindestens zwei Elektroden. Eine ist in der Regel die Masse, die zweite ist eine Messelektrode (Empfangselektrode). Bei einem Kraftfahrzeug wird die Masse durch die Karosserie gebildet, so dass es bereits ausreicht, wenn lediglich eine Elektrode in dem Mantel geführt ist. Bei Annäherung eines Gegenstandes in den Sensorbereich wird das Potentialfeld geändert. Um das Potentialfeld bzw. dessen Änderung zu messen, kann ein Sensor mit mehreren Elektroden von Vorteil sein.

Die Umwicklung der optischen Faser mit den Drähten hat mehrere Vorteile. Zum einen wird hierbei ein sehr kompakter Aufbau erreicht und gleichzeitig wird gewährleistet, dass beide Sensortypen über die gesamte Länge beispielsweise einer zu überwachenden Schließkante parallel laufen. Weiterhin ist das Herstellen einer derartigen Kombination aus optischer Faser bzw. optischem Sensorelement und darum gewickelten Drähten problemlos und mit hoher Geschwindigkeit und damit kostengünstig mit herkömmlichen Maschinen möglich, wie sie beispielsweise bei der Drahtherstellung insbesondere von Koaxialkabeln eingesetzt werden.

Um bei der ersten Alternative, bei der die optische Faser direkt im Mantel einliegt und von der Elektrode direkt umgeben ist, die Funktionsfähigkeit des optischen Sensors zu gewährleisten ist vorgesehen, dass bei der Umwicklung mit einem Drahtgeflecht regelmäßig Fenster oder Bereiche freigehalten sind, so dass in diesen Bereichen der Mantel gegen die optische Faser gepresst werden kann. Die offenen Bereiche bilden hierbei vorzugsweise mehr als 50% der Oberfläche der optischen Faser. Ein weiterer Vorteil der helixförmigen Umwicklung der optischen Faser mit den Drähten ist darin zu sehen, dass die Drähte zugleich als Abstandshalter für den Mantel wirken. Wie bereits erwähnt, ist für die Funktionsfähigkeit des optischen Sensors von Bedeutung, dass zwischen der optischen Faser und dem diese umgebenden Mantel ein Zwischenraum (üblicherweise mit Luft gefüllt) angeordnet ist, so dass erst bei einer Druckbeaufschlagung der Mantel gegen die Oberfläche der optischen Faser gedrückt wird.

Vorzugsweise ist eine zweite Elektrode vorgesehen, die insbesondere in die Wandung des Mantels integriert ist. Die beiden Elektroden wirken hierbei nach Art eine Sende- und Empfangselektrode. Die Sendeelektrode ist hierbei mit einer Wechselspannung, beispielsweise mit einer Frequenz in kHz oder MHz-Bereich beaufschlagt. Die zugehörigen Wellenlängen sind hierbei im Vergleich zu der üblichen Länge des Sensorelements im Bereich von einem bis wenige Meter sehr lang, so dass für die elektrische Auswerteelektronik es sich um einen quasi stationären Zustand handelt, d.h. während der Auswertung des elektrischen Signals kann man das Potential entlang der Elektrode als konstant betrachten. Sowohl die erste, vorzugsweise um die optische Faser gewickelte Elektrode, als auch die zweite Elektrode können wahlweise als Sende- oder Empfangselektrode eingesetzt werden. Bevorzugt wird jedoch die zweite, in die Wandung des Mantels integrierte Elektrode als Sendeelektrode herangezogen, die mit einer Wechselspannung mit Hilfe einer Spannungsquelle (Transistor) beaufschlagt wird. In der Empfangselektrode stellt sich daraufhin eine Art Antwortsignal ein, welches von der elektrischen Auswerteeinheit ausgewertet wird. Wird das sich ausbildende elektrische Feld durch einen Gegenstand gestört, so verändert sich dieses Antwortsignal und die Auswerteeinheit erfasst das Eindringen eines Gegenstandes.

Für die zweite Elektrode wird hierbei vorzugsweise ein Flachkabel, insbesondere eine flache Flechtlitze verwendet, die insbesondere sehr biegeflexibel ist und sich besonders für den Einsatz in dem Sensorelement eignet. Das leitende Flachgeflecht besteht hierbei aus kupferleitenden Materialien, beispielsweise einzelnen Kupferlitzen, kann jedoch auch aus leitenden Kunststoffgeweben gebildet sein oder auch durch gespritzte Leiterbahnen.

Der Mantel ist hierbei vorzugsweise gebildet durch ein Dichtprofil bzw. eine Dichtung, die an einer Randseite eines Schließelements bzw. eines Anschlags für das Schließelement oder bei beiden angeordnet ist. Das Dichtprofil besteht hierbei beispielsweise aus Gummi oder einem geeigneten Kunststoff.

Die Erfindung wird weiterhin gelöst durch ein Verfahren gemäß Anspruch 15.

Das Verfahren dient zur Überwachung eines Schließmechanismus im Hinblick auf ein mögliches Einklemmen eines Gegenstands zwischen zwei relativ zueinander bewegten Teilen des Schließmechanismus unter zu Hilfenahme des Sensorsystems. Der Schließmechanismus ist hierbei insbesondere eine motorisch angetriebene Fensterhebevorrichtung, Schiebetürvorrichtung oder ein sonstiges motorisch angetriebenes Schließsystem. Bei dem Verfahren wird der Schließmechanismus parallel sowohl mit Hilfe des optischen Durcksensors als auch mit Hilfe des elektrischen, insbesondere kapazitiven Sensors überwacht. Während der kapazitive Sensor bereits auf eine Näherung eines Objekts wie beispielsweise eine menschliche Hand im Vorfeld eines Einklemmens reagiert, ist der optische Drucksensor sensibel für bereits geringste Druckausübungen gegen das optische Sensorelement. Die beiden Sensoren ergänzen sich daher, so dass ein zuverlässiges, fehlerfreies Einklemmschutzsystem gebildet ist.

Der elektrische Sensor arbeitet hierbei nach Art eines kapazitiven Näherungsschalters. Allgemein wird durch die zumindest eine Elektrode ein elektrisches Feld um die Elektrode erzeugt. Beim Eindringen eines Objekts in den Nahbereich um die Elektrode ist eine Veränderung des elektrischen Feldes feststellbar, welche durch eine geeignete Auswertelogik identifizierbar ist. Durch geeignete Anregung der Elektrode wird daher ein definiertes elektrisches Feld außerhalb des Sensors erzeugt.

Infolge von betriebsüblichen Vorgängen, beispielsweise dem Schließvorgang, ändert sich das elektrische Feld aufgrund des Aufeinanderzubewegens der zwei relativ zueinander beweglichen Teile in einer charakteristischen Weise, die als eine Signatur bezeichnet werden kann. Diese Signatur wird der Auswerteelektronik beispielsweise durch einen Einlernvorgang bekannt gegeben. Sobald ein externes Objekt zwischen die beiden relativ zueinander beweglichen Teile gelangt, wird diese charakteristische Signatur gestört. Eine solche Störung wird, insbesondere wenn sie eine gewisse Toleranzgrenze überschreitet, durch die Auswerteelektronik als ein Einklemmfall identifiziert.

Parallel hierzu wird kontinuierlich überprüft, entweder ununterbrochen oder in periodischen Abständen, ob ein Druck auf den optischen Drucksensor ausgeübt wird. Sobald nämlich ein leichtes Berühren des optischen Sensorelements erfolgt, wird die elastische Umhüllung, nämlich entweder der Mantel (Dichtprofil) oder der Schutzschlauch, gegen die optische Faser gedrückt und die Lichtausbreitung in der optischen Faser erfährt eine Störung, die als Einklemmfall identifiziert wird. Auch beim Drucksensor ist ein Einlernen vorgesehen, um den normalen Schließvorgang nicht als ein Einklemmfall zu identifizieren, da beim Aufeinandertreffen der beiden relativ verschieblichen Teile, also beispielsweise beim Gegenlaufen der Schiebetür gegen den Rahmen, naturgemäß ein Druck auf das Dichtprofil ausgeübt wird. Die Auswerteelektronik für den Drucksensor berücksichtigt hierbei die tatsächliche Ist-Position des Verstellelements wie beispielsweise die Tür oder die Scheibe in Relation zu einem Rahmenteil. Diese Relativposition wird entweder aktiv durch einen geeigneten Sensor oder auch durch eine Auswertung der Motoransteuerung des motorischen Antriebs des Schiebemechanismus vorgenommen. Die so erhaltenden Positionsdaten des Schiebemechanismus können natürlich auch für den elektronischen Sensor und die Auswertung des elektrischen Signals herangezogen werden.

Die Auswertung der Signale sowohl des elektrischen Sensors als auch des optischen Drucksensors erfolgen vorzugsweise mit Hilfe eines geeigneten Auswertealgorithmus, um eine sichere, fehlerfreie Identifizierung des Einklemmfalls zu gewährleisten. Für die Auswertung im Auswertealgorithmus werden hierzu die Sensorsignale in geeigneter Weise umgewandelt oder codiert, dass sie vom Algorithmus auswertbar sind.

Sobald von einem der beiden Sensoren mit zugehöriger Auswerteelektronik auf einen Einklemmfall erkannt wird, wird ein geeignetes Warn- oder Stoppsignal von der Auswerteelektronik abgegeben und der motorische Antrieb des Schließmechanismus wird gestoppt und ggf. ergänzend reversiert. Hierbei kann vorgesehen sein, dass das von der Auswerteelektronik abgegeben Signal an eine zentrale Steuereinheit, beispielsweise ein Steuermodul übermittelt wird, welche dann das Stoppen des Antriebsmoduls veranlasst.

Um einen dauerhaft zuverlässigen und sichern Betrieb zu gewährleisten ist zweckdienlicherweise eine kontinuierliche Kontrolle der Funktionsfähigkeit der beiden Sensoren vorgesehen. Hierzu werden in geeigneter Weise die Sensoren entweder in periodischen Zeitabständen oder dauerhaft im Hinblick auf Ihre Funktionsfähigkeit überprüft. Die Überprüfung wird ausgewertet und der aktuelle Betriebszustand (funktionsfähig - nicht funktionsfähig), wird zweckdienlicherweise ebenfalls an eine zentrale Steuereinheit wie das zentrale Türsteuermodul weitergeleitet. Es ist somit für das zentrale Steuermodul jederzeit erkennbar, ob das Einklemm-Überwachungssystem aktiv ist und zuverlässig arbeitet. Das Zustandssignal für den jeweiligen Sensor kann alternativ auch von der zentralen Einheit abgefragt werden.

Ausführungsbeispiele der Erfindung werden im Nachfolgenden anhand der Zeichnung näher erläutert. Es zeigen jeweils in schematischen und stark vereinfachten Darstellungen:
- Fig. 1: eine Ansicht einer motorisch verstellbaren Schiebetüre,
- Fig. 2: eine Querschnittsansicht durch ein Dichtprofil mit darin integrierter opti- scher Faser sowie erster und zweiter Elektrode mit angedeutetem Schal- tungsbild für den elektrischen Sensor,
- Fig. 3 bis 11: Querschnittsdarstetlungen durch ein Dichtprofil für unterschiedliche Aus- führungsvarianten sowie
- Fig. 12: eine Längsschnittdarstellung im Endbereich der optischen Faser, sowie
- Fig. 13: exemplarische Verläufe von Signalen des elektrischen Sensors

In den Figuren sind gleich wirkende Teile mit den gleichen Bezugszeichen versehen.

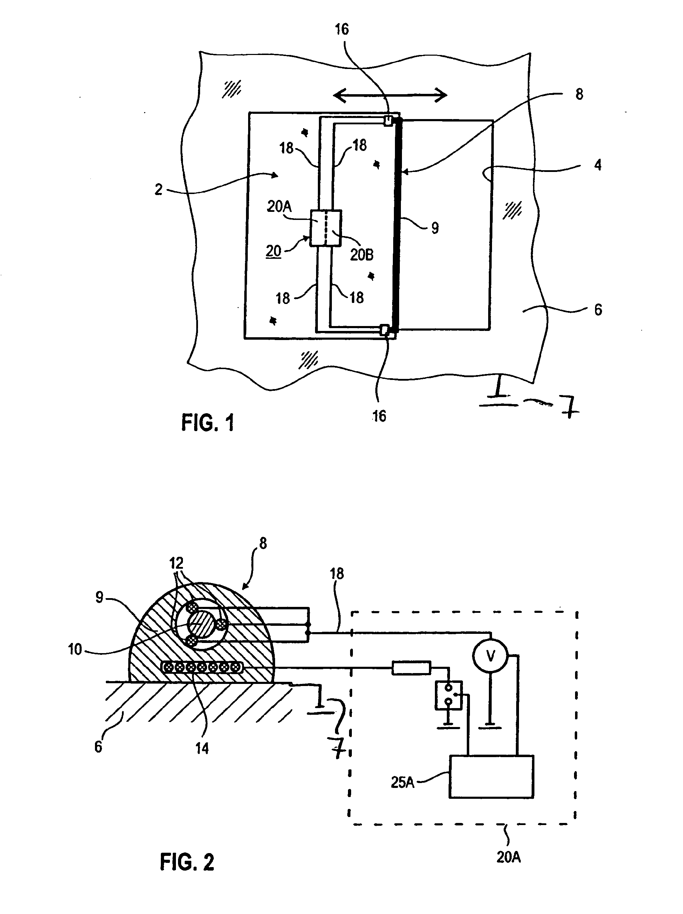

Fig. 1 zeigt einen Schließmechanismus am Ausführungsbeispiel einer Schiebetüre 2, die in Richtung des Doppelpfeils in einer Führung verschieblich gelagert ist und gegen einen Anschlag 4 insbesondere einer Kraftfahrzeugkarosserie 6 in eine Schließposition verfahrbar ist. Die Karosserie 6 liegt auf Massepotential 7. Die Schiebetüre 2 weist an ihrer zum Anschlag 4 orientierten vorderen Stirnseite ein Sensorelement 8 auf. Alternativ kann das Sensorelement auch an der korrespondierenden Stirnseite des Anschlags 4 oder sowohl an der Stirnseite der Schiebetüre 2 als auch an der des Anschlags 4 angeordnet sein. Das Sensorelement 8 ist hierbei gebildet durch ein Gummi-Dichtprofil 9, in dem eine optische Faser 10, eine um diese helixförmig gewickelte erste Elektrode 12 sowie bevorzugt auch eine zweite Elektrode 14 integriert sind (vgl. hierzu Fig. 2 bis 11).

Im Ausführungsbeispiel der Fig. 1 sind an beiden Enden des Sensorelements 8 Koppelelemente 16 vorgesehen, über die elektrische Verbindungsleitungen 18 zu einer Auswerteeinheit 20 gehen. In den Koppelelementen 16 wird mit Hilfe einer hier nicht näher dargestellten Lichtquelle (LED) sowie eines hier nicht näher dargestellten Lichtsensors Licht in die optische Faser 10 ein- bzw. ausgekoppelt. Gleichzeitig wird über die Koppelelemente die elektrische Versorgung bzw. Anbindung der beiden Elektroden 12,14 bewerkstelligt. Die Koppelelemente 16 sind hierbei vorzugsweise nach Art von Steckverbindungen ausgebildet, wobei hier vorzugsweise jeweils kombinierte Koppelelemente 16 vorgesehen sind, über die gemeinsam sowohl die optische Faser 10 als auch die beiden Elektroden 12,14 angekoppelt werden.

Die Auswerteeinheit 20 ist hierbei aufgebaut aus zwei Teileinheiten, nämlich einer elektrischen Teil-Auswerteeinheit 20A sowie einer optischen Teil-Auswerteeinheit 20B. Die elektrische Teil-Auswerteeinheit 20A dient zur Auswertung der elektrischen Signale des elektrischen Teil-Sensorelements und die optische Teil-Auswerteeinheit 20B dient zur Auswertung der Signale des optischen Teil-Sensorelements.

Unter Teil-Sensorelemente werden hierbei jeweils diejenigen Elemente verstanden, die zur Ausbildung einerseits des elektrischen Sensors und andererseits des optischen Sensors erforderlich sind. Im Falle des elektrischen Teil-Sensorelements sind dies im Ausführungsbeispiel die zumindest erste Elektrode 12 bzw. die beiden Elektroden 12,14. Im Falle des optischen Teil-Sensorelements ist dies die optische Faser 10 mit dem sie umgebenden Mantel, der durch das Dichtprofil 9 gebildet ist, wobei das Dichtprofil 9 zur optischen Faser 10 einen Zwischen- oder Freiraum einschließt, der üblicherweise mit Luft gefüllt ist.

In den Koppelelementen 16 sind vorzugsweise als Lichtquelle sowie als Lichtsensor geeignete Halbleiter-Bausteine vorgesehen, die über eine entsprechende elektrische Ansteuerung Licht emittieren bzw. Licht detektieren und in ein elektrisches Signal umwandeln, welches dann über die Verbindungsleitung 18 zu der optischen Teil-Auswerteeinheit 20B zurückgeführt wird.

Durch die optische Teil-Auswerteeinheit 20B, das optische Teil-Sensorelement und die Koppelelemente 16 ist ein optischer Drucksensor gebildet, der auf der Auswertung einer Störung bzw. Änderung des sich in der optischen Faser 10 ausbreitenden Evanescent-Feldes beruht. Sobald auf das Dichtprofil 9 ein Druck ausgeübt wird, wird das Dichtprofil 9 gegen die optische Faser 10 gepresst, wodurch das Evanescent-Feld gestört wird und wodurch wiederum eine Signaländerung erzeugt wird, die von der optischen Teil-Auswerteeinheit 20B erfasst wird.

Parallel zum optischen Drucksensor ist über die gesamte Länge des Sensorelementes 8 ein elektrischer, insbesondere kapazitiver Sensor ausgebildet, welcher umfasst die beiden Elektroden 12,14, die elektrische Teil-Auswerteeinheit 20A sowie die elektrischen Versorgungsleitungen 18 zur Teil-Auswerteeinheit 20A.

Wie insbesondere aus Fig. 2 zu entnehmen ist, ist die erste Elektrode 12 durch drei Einzeldrähte gebildet, die um die optische Faser 10 helixförmig gewunden sind. Die drei Drähte bilden gemeinsam die erste Elektrode 12, die über die gemeinsame Verbindungsleitung 18 mit der Teil-Auswerteeinheit 20A verbunden ist. In dieser ist eine Messeinheit 22 zur Erfassung des Spannungsverlaufs und Spannungspegels vorgesehen, der an der ersten Elektrode 12 anliegt. Die erste Elektrode bildet hierbei eine Empfangselektrode. Daneben ist die zweite Elektrode 14 nach Art einer geflochtenen Flechtlitze in das Dichtprofil 9 integriert, insbesondere durch Koextrusion gemeinsam mit dem Dichtprofil 9 hergestellt. Die zweite Elektrode 14 ist mit einer Spannungsquelle 24, beispielsweise ein Transistor, der Teil-Auswerteeinheit 20A verbunden. In der Teil-Auswerteeinheit 20A ist weiterhin eine Steuereinheit 25A vorgesehen, über die die Spannungsquelle 24 angesteuert wird und die zugleich auch das über die Messeinheit 22 gemessene Spannungssignal der ersten Elektrode 12 auswertet. Durch geeignete, an sich bekannte Auswertemethoden wird durch den elektrischen Sensor erfasst, ob das sich bildende elektrische Feld aufgrund eines Gegenstands in der Nähe der Elektroden 12,14 verändert ist. Eine derartige Veränderung wird dann als das Eintreten eines Gegenstands in den Nahbereich zu den Elektroden 12,14 erkannt.

In ähnlicher Weise wie die elektrische Teilauswerteeinheit 20A ist auch die optische Teil-Auswerteeinheit 20B ausgebildet, da auch bei dieser elektrische Steuersignale zur Ansteuerung der Lichtquelle einerseits und elektrische Antwortsignale vom Lichtsensor andererseits aus- bzw. eingehen. Gleichermaßen ist auch hier ein Steuerelement vorgesehen, um die Lichtquelle anzusteuern und die entsprechenden elektrischen Signale des Lichtsensors zu empfangen und insbesondere durch Vergleich der gesendeten Steuersignale an die Lichtquelle mit den empfangenen Signalen zu vergleichen und auszuwerten.

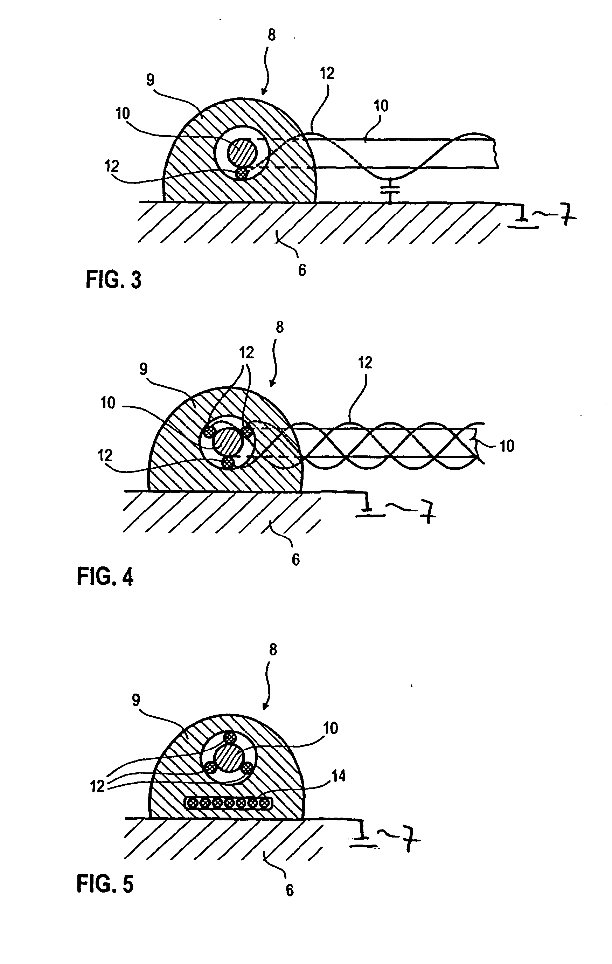

In den Fig. 3 und 4 ist eine Ausführungsvariante mit lediglich der ersten Elektrode 12 dargestellt, wobei im Falle der Fig. 3 lediglich ein Draht die Elektrode 12 bildet. In der linken Bildhälfte ist hier jeweils der Schnitt durch das Dichtprofil 9 dargestellt und in der rechten Bildhälfte ist der sich in Ausbreitungsrichtung des Sensorelements 8 erstreckende Verlauf der optischen Faser 10 mit der darum helixförmig gewickelten ersten Elektrode 12 dargestellt. Für die Ausbildung des kapazitiven Sensors (elektrischer Sensor) ist die Verwendung prinzipiell einer Elektrode 12 ausreichend. Vorzugsweise werden jedoch wie in Fig. 2 und nochmals in Fig. 5 dargestellt, zwei Elektroden 12,14 verwendet, da hierdurch die Sensitivität verbessert ist.

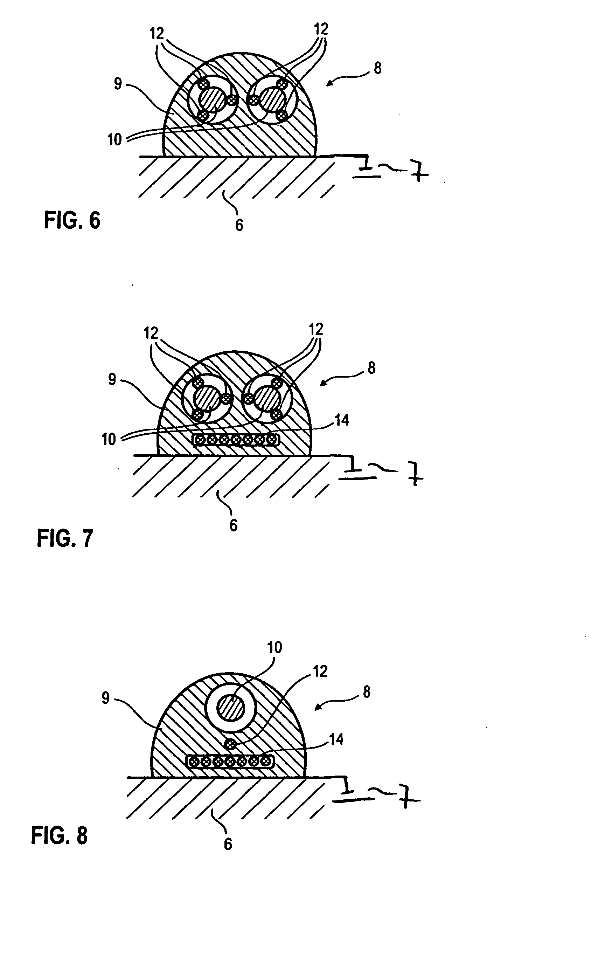

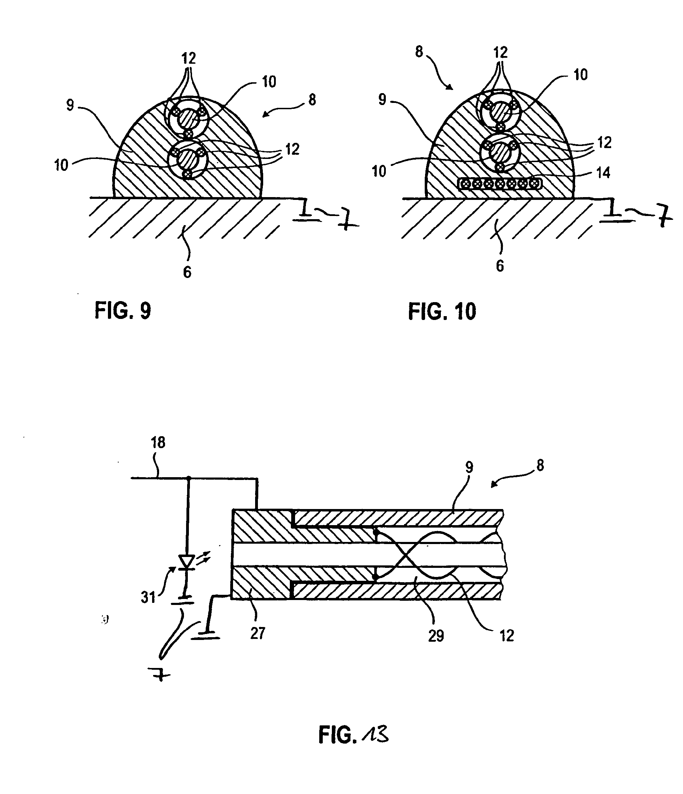

Alternativ zu der in Fig. 1 dargestellten Ausführungsvariante, bei denen sowohl die optische Faser 10 als auch die Elektroden 12,14 von einem Ende des Sensorelements 8 zum anderen Ende durchgeführt und an den beiden Enden jeweils Koppelelemente 16 vorgesehen sind, besteht auch die Möglichkeit, die optische Faser 10 nach Art einer Schleife zu verlegen, so dass lediglich an einem Koppelelement 16 sowohl Licht einals auch ausgekoppelt wird. D.h. die optische Faser hat an dem dem Koppelelement 16 abgewandten Ende des Sensorelements 8 einen Umkehrpunkt und wird im Sensorelement 8, also im Dichtprofil 9, wieder zurückgeführt. Die Fig. 6 und 7 sowie 9 und 10 zeigen einen derartigen Anwendungsfall, bei dem die optische Faser 10 mit der darum gewickelten ersten Elektrode 12 jeweils nach Art einer Schleife im Dichtprofil 9 verlegt sind. Vorzugsweise ist hierbei am Umkehrpunkt der Schleife die erste Elektrode 12 elektrisch getrennt. Die Fig. 6 und 9 zeigen hierbei jeweils Ausführungsvarianten, bei denen jeweils nur die erste Elektrode 12 vorgesehen ist. Im Falle, dass die Elektrode 12 insbesondere im Umkehrpunkt der Schleife elektrisch getrennt ist, stehen hiermit zwei über die Länge des Sensorelements 8 parallel geführte Elektroden 12 zur Verfügung. In den Ausführungsbeispielen der Fig. 7 und 10 sind jeweils wieder zweite Elektroden 14 vorgesehen, und in etwa dem Ausführungsbeispiel gemäß den Fig. 2 und 5 entsprechen mit dem Unterschied, dass die optische Faser 10 in einer Schleife verlegt ist.

Die Ausführungsbeispiele der Fig. 9 und 10 unterscheiden sich von denen der Fig. 6 und 7 dadurch, dass hier die in einer Schleife verlegte optische Faser 10 mit ihren zwei Teilstücken in vertikaler Richtung anstelle der in den Fig. 6 und 7 dargestellten horizontalen Richtung (bezogen auf die Ausbreitungsrichtung der Karosserie 6, an der das Dichtprofil 9 befestigt ist) orientiert sind. Hierbei ist die vertikale Ausrichtung gemäß den Fig. 9 und 10 bevorzugt, da diese im Hinblick auf den optischen Sensor von Vorteil ist.

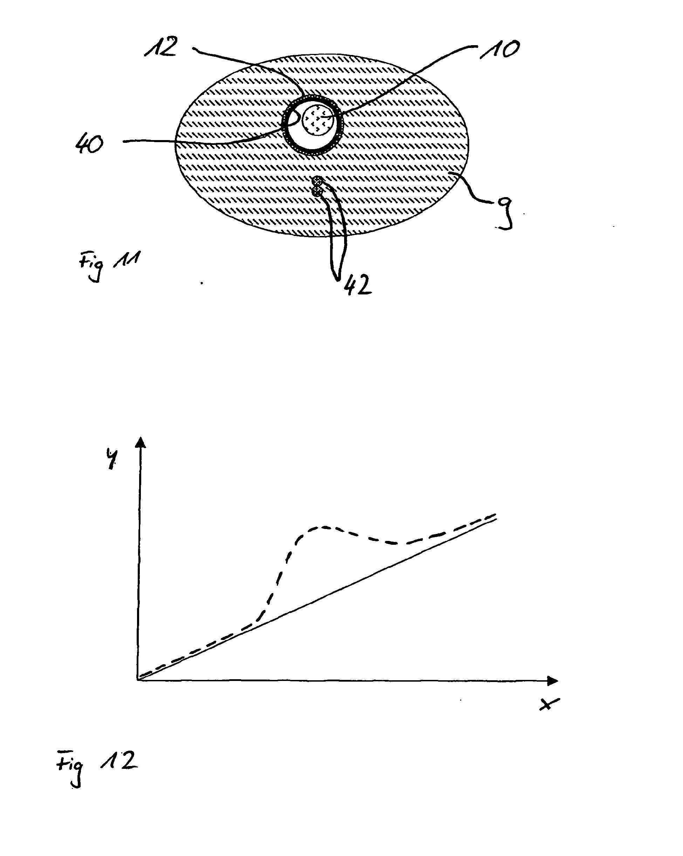

Beim Ausführungsbeispiel gemäß der Figur 11 ist im Unterschied zu den vorangegangenen Ausführungsbeispielen die Elektrode 12 nicht unmittelbar um die optische Faser 10 verlaufend ausgebildet. Vielmehr ist die optische Faser 10 in einem Schutzschlauch 40 lose verlaufend angeordnet. Zwischen der optischen Faser 10 und der Innenwandung des Schutzschlauches 40 ist daher ein Freiraum gebildet. Der Schutzschlauch 40 besteht aus einem elastischen Material und ist durch das den Mantel bildende Dichtprofil 9 hindurchgeführt. Das Dichtprofil 9 weist hierzu eine geeignete Röhre auf. Der Schutzschlauch 40 ist wiederum von einem hüllenartigen Geflecht umgeben, welches die erste Elektrode 12 bildet. Das Geflecht ist hierbei nach Art eines Abschirmgeflechts in an sich bekannter Weise ausgebildet. Im Ausführungsbeispiel der Figur 11 sind die optische Faser 10 und der Schutzschlauch 40 das drucksensitive optische Sensorelement, wohingegen bei den vorhergehende Ausführungsbeispielen das optische, drucksensitive Sensorelement unmittelbar von dem den Mantel bildenden Dichtprofil 9 in Kombination mit der optischen Faser 10 gebildet wurde.

Ergänzend ist bei der Ausführungsvariante gemäß Figur 11 noch vorgesehen, dass direkt im Dichtprofil 9 auch Versorgungsleitungen 42 zur Versorgung der Lichtquelle des optischen Drucksensors verlaufen. Alternativ zu der zusätzlichen Anordnung von Versorgungsleitung 42 werden die beispielsweise in den Figuren 2 -10 dargestellten ersten Elektroden 12 oder auch die zweiten Elektroden 14 parallel auch als Versorgungsleitungen für die Lichtquelle herangezogen.

In Figur 12 sind stark vereinfacht und beispielhaft Signalverläufe des Sensorsignals des elektrischen Sensors dargestellt. Und zwar ist hier auf der horizontalen Achse (X-Achse) der Verfahrweg des jeweiligen Schließelements beispielsweise der Tür oder Fensterscheibe angegeben. Auf der vertikalen Achse (Y-Achse) ist das elektrische Messsignal oder ein zum elektrischen Messsignal korrespondierendes Signal aufgetragen. Die durchgezogene Linie gibt den normalen Betriebsfall wieder, wenn nämlich eine Veränderung des elektrischen Feldes und damit des Messsignals bei Annäherung des Schließelements an die auftritt. Die durchgezogene Linie wird hierbei vorzugsweise in der Auswerteeinheit 20b nach einem Einlernvorgang hinterlegt und kennzeichnet einen betriebsüblichen Vorgang, bei dem noch nicht auf einem Einklemmfall erkannt wird.

Mit der gestrichelten Linie ist eine abnormale Abweichung von dem normalen Signalverlauf gemäß der durchgezogenen Linie dargestellt und zwar entspricht dies dem Fall, wenn ein externes Objekt beispielsweise zwischen Fensterscheibe und Fensterrahmen gelangt, so dass die Gefahr eines Einklemmens besteht. Dieses zusätzliche externe Objekt führt zu einer charakteristischen Abweichung des normalen zu erwartenden Signalverlaufs. Diese charakteristische Abweichung von dem normalen Signalverlauf, der so genannten Signatur, wird als Einklemmfall identifiziert.

Schließlich ist in Fig. 13 noch ein Längsquerschnitt durch ein Ende des Sensorelements 8 im Bereich der Koppelelemente 16 gezeigt. Und zwar ist am Ende der optischen Faser 10 diese von einer so genannten Ferrule 27 umgeben. Als Ferrule wird allgemein ein Führungsröhrchen bezeichnet, welches in einem Lichtwellenleiter-Stecker die optische Faser aufnimmt. Die Ferrule 27 besteht im Ausführungsbeispiel vorzugsweise aus einem leitfähigen Stoff, insbesondere aus Metall. An die Ferrule 27 schließt sich der durch das Dichtprofil 9 gebildete schlauchartige Mantel an, der die optische Faser 10 unter Einschluss eines Zwischenraums 29 umgibt. Die einzelnen Drähte der Elektrode 12 sind mit der Ferrule 27 kontaktiert. Am anderen Ende der Ferrule ist die Verbindungsleitung 18 kontaktiert, so dass über diese die Verbindung der Elektrode 12 mit der Auswerteeinheit 20 hergestellt ist. Die Kontaktierung der Verbindungsleitung 18 mit der Ferrule 27 erfolgt vorzugsweise nach Art einer Steckverbindung.

Weiterhin ist aus Fig. 11 zu entnehmen, dass in diesem Ausführungsbeispiel die Verbindungsleitung 18 zugleich auch zur Versorgung der hier dargestellten Lichtquelle 31 vorgesehen ist. Bei diesem Ausführungsbeispiel ist daher nur eine Verbindungsleitung zwischen der Auswerteeinheit 20 und dem entsprechenden Koppelelement 16 erforderlich. Um hier eine eindeutige Signalauswertung zu ermöglichen werden gegebenenfalls geeignete elektrische Filter eingesetzt bzw. die Signale werden in geeigneter Weise moduliert.

### Bezugszeichenliste

- 2: Schiebetür
- 4: Anschlag
- 6: Karosserie
- 7: Massepotential
- 8: Sensorelement
- 9: Dichtprofil
- 10: optische Faser
- 12: erste Elektrode
- 14: zweite Elektrode
- 16: Koppelelement
- 18: Verbindungsleitung
- 20: Auswerteeinheit
- 20A: elektrische Teil-Auswerteeinheit
- 20B: optische Teil-Auswerteeinheit
- 22: Messeinheit
- 24: Spannungsquelle
- 25A: Steuerelement
- 27: Ferrule
- 29: Zwischenraum
- 31: Lichtquelle
- 40: Schutzschlauch
- 42: Versorgungsleitung

## Patentansprüche

1. Sensorsystem, insbesondere zur Überwachung eines motorisch angetriebenen Schließmechanismus auf ein Einklemmen eines Gegenstands zwischen zwei relativ zueinander bewegten Teilen (2,4) des Schließmechanismus, mit einem optischen Drucksensor, der aufweist
- ein optisches Sensorelement mit einem lichtleitenden Element (10),
- eine Lichtquelle (31) zum Einkoppeln von Licht in das lichtleitende Element (10),
- einen Lichtsensor zum Erfassen von aus dem lichtleitenden Element (10) ausgekoppelten Licht und
- eine erste Auswerteeinheit (20B) zur Auswertung des ausgekoppelten Lichts, wobei zusätzlich ein elektrischer kapazitiver Sensor vorgesehen ist, der aufweist
- zumindest eine mit einer Spannungsquelle (24) verbundene Elektrode (12,14) sowie
- eine zweite Auswerteeinheit (20A) zur Auswertung eines Spannungssignals,
**dadurch gekennzeichnet**
**dass** das optische Sensorelement gemeinsam mit der Elektrode (12,14) in einem schlauchförmigen Mantel (9) angeordnet ist.

2. Sensorsystem nach Anspruch 1,
bei dem die Elektrode (12) am lichtleitenden Element (10), welches claddingfrei ist, entlang geführt ist.

3. Sensorsystem nach einem der vorhergehenden Ansprüche,
bei dem die Elektrode (12) um das lichtleitenden Element (10), welches claddingfrei ist, gewunden ist.

4. Sensorsystem nach Anspruch 2 oder 3,
bei dem unmittelbar um das lichtleitende Element (10) ein die Elektrode (12) bildendes Geflecht angeordnet ist, das regelmäßig Oberflächenbereiche des lichtleitenden Elements (10) freilässt.

5. Sensorsystem nach einem der vorhergehenden Ansprüche,
bei dem die Elektrode (12) einen Abstandshalter zwischen dem lichtleitenden Element (10), welches claddingfrei ist, und dem Mantel bildet.

6. Sensorsystem nach einem der vorhergehenden Ansprüche,
bei dem die Elektrode (12) mit einer Ferrule (27) am Ende des optischen Sensorelements kontaktiert ist.

7. Sensorsystem nach einem der vorhergehenden Ansprüche,
bei dem eine zweite Elektrode (14) vorgesehen ist, die als Sendeelektrode mit der Spannungsquelle (24) verbunden ist und der ersten Elektrode (12) gegenüberliegt, die eine Empfangselektrode bildet und mit der zweiten Auswerteeinheit (20A) verbunden ist, wobei eine der beiden Elektroden (12,14) in einer Wandung des schlauchförmigen Mantels (9) integriert ist.

8. Sensorsystem nach Anspruch 7,
bei dem beide Elektroden (12,14) in der Wandung des Mantels (9) integriert und das optische Sensorelement (10) durch einen Hohlraum im Mantel (9) geführt ist.

9. Sensorsystem nach Anspruch 7 oder 8,
bei dem zumindest eine der Elektroden (12,14) durch Koextrusion in den Mantel (9) eingebettet ist.

10. Sensorsystem nach einem der vorhergehenden Ansprüche,
bei dem in den Mantel (9) zugleich auch eine Versorgungsleitung (42) für die Lichtquelle (31) integriert ist und die Versorgungsleitung (42) für die Lichtquelle (31) auch die zumindest eine Elektrode bildet.

11. Sensorsystem Anspruch 1,
bei dem das lichtleitende Element (10) aus einem leitfähigen Material besteht und zugleich die Elektrode bildet.

12. Sensorsystem nach Anspruch 1,
bei dem der Mantel (9) aus einem leitfähigen Material besteht und zugleich die Elektrode bildet.

13. Sensorsystem nach einem der vorhergehenden Ansprüche,
bei dem der Mantel (9) ein Dichtelement für ein Schließelement wie beispielsweise eine Tür (2) ist.

14. Sensorsystem nach Anspruch 1,
bei dem der Mantel (9) ein Dichtprofil für eine Kraftfahrzeugtür (2) ist und in dem Mantel ein Schutzschlauch (40) eingebettet ist, in dem eine optische Faser als lichtleitendes Element (10) lose geführt ist, wobei am Schutzschlauch (40) entlang die Elektrode verläuft.

15. Verfahren zur Überwachung eines Schließmechanismus im Hinblick auf ein mögliches Einklemmen eines Gegenstandes zwischen zwei relativ zueinander bewegten Teilen (2,4) des Schließmechanismus mit Hilfe des Sensorsystems nach einem der Ansprüche 1 bis 14, wobei der Schließmechanismus parallel sowohl mit Hilfe des optischen Drucksensors als auch mit Hilfe des elektrischen Sensors überwacht wird.

## Claims

1. Sensor system, particularly for monitoring a motor-driven closing mechanism with respect to the jamming of an object between two parts (2, 4) of the closing mechanism that are movable relative to one another, said sensor system having an optical pressure sensor, which comprises
- an optical sensor element with a light-guiding element (10),
- a light source (31) for light incoupling into the light-guiding element (10),
- a light sensor for capturing light outcoupled from the light-guiding element (10), and
- a first evaluation unit (20B) for evaluating the light that has been outcoupled, whereat in addition an electric capacitive sensor is provided, comprising
- at least one electrode (12, 14) which is connected with a voltage source (24), as well as
- a second evaluation unit (20A) for evaluating a voltage signal,
**characterized in**
the optical sensor element being arranged in a tubular casing (9) together with the electrode (12, 14).

2. Sensor system according to claim 1,
whereat an electrode (12) is guided along the light-guiding element (10), which is cladding-free.

3. Sensor system according to one of the previous claims,
whereat the electrode (12) is wound around the light-guiding element (10), which is cladding-free.

4. Sensor system according to claim 2 or 3,
whereat a meshwork forming the electrode (12) is arranged directly around the light-guiding element (10), said meshwork leaving parts of the light-guiding element (10) at regular intervals open.

5. Sensor system according to one of the previous claims,
whereat the electrode (12) is a spacer between the light-guiding element (10), which is cladding-free, and the casing.

6. Sensor system according to one of the previous claims,
whereat the electrode (12) is contacted with a ferrule (27) at the end of the optical sensor element.

7. Sensor system according to one of the previous claims,
whereat a second electrode (14), which is connected to the voltage source (24) as a transmitting electrode and lies opposite the first electrode (12), is provided, said second electrode (12) being a receiving electrode and being connected with the second evaluation unit (20A), whereat one of the two electrodes (12, 14) is integrated in a cladding of the tubular casing (9).

8. Sensor system according to claim 7,
whereat both electrodes (12, 14) are integrated in the cladding of the casing (9) and the optical sensor element (10) is guided through a hollow space in the casing (9).

9. Sensor system according to claim 7 or 8,
whereat at least one of the electrodes (12, 14) is embedded in the casing (9) by coextrusion.

10. Sensor system according to one of the previous claims,
whereat at the same time a supply line (42) for the light source (31) is integrated in the casing (9), and said supply line (42) is also the at least one electrode for the light source (31).

11. Sensor system according to claim 1,
whereat the light-guiding element (10) consists of a conductive material and the light-guiding element (10) is the electrode.

12. Sensor system according to claim 1,
whereat the casing (9) consists of a conductive material and the casing (9) is at the same time the electrode.

13. Sensor system according to one of the previous claims,
whereat the casing (9) is a sealing element for a closing element, such as for example a door (2).

14. Sensor system according to claim 1,
whereat the casing (9) is a sealing strip for a door of a motor vehicle (2) and a protective hose (40) is embedded in the casing (9), an optical fiber being loosely guided as a light-guiding element (10) in the protective hose (40), whereat the electrode runs along the protective hose (40).

15. Sensor system for monitoring a closing mechanism with regard to a possible jamming of an object between two parts (2, 4) of the closing mechanism that are movable in relation to one another, with the aid of the sensor system according to one of the claims 1 to 14, whereat the closing mechanism is paralelly monitored with the aid of the optical pressure sensor as well as with the aid of the electric sensor.

## Revendications

1. Système capteur, en particulier pour la surveillance d'un mécanisme de fermeture entraîné par un moteur vis-à-vis d'un coincement d'un objet entre deux parties (2, 4) mobiles l'une par rapport à l'autre du mécanisme de fermeture, comprenant un capteur de pression optique, qui comprend
- un élément capteur optique avec un élément conducteur de lumière (10),
- une source de lumière (31) pour coupler de la lumière dans l'élément conducteur de lumière (10),
- un capteur de lumière pour détecter la lumière découplée hors de l'élément conducteur de lumière (10), et
- une première unité d'évaluation (20B) pour évaluer la lumière découplée, dans lequel il est prévu additionnellement un capteur électrique capacitif qui comprend
- au moins une électrode (12, 14) reliée à une source de tension (24) et
- une seconde unité d'évaluation (20A) pour évaluer un signal de tension,
**caractérisé en ce que**
l'élément capteur optique est agencé conjointement avec l'électrode (12, 14) dans une enveloppe en forme de tuyau souple (9).

2. Système capteur selon la revendication 1,
dans lequel l'électrode (12) est guidée le long de l'élément conducteur de lumière (10), lequel est dépourvu de revêtement.

3. Système capteur selon l'une des revendications précédentes,
dans lequel l'électrode (12) est enroulée autour de l'élément conducteur de lumière (10), lequel est dépourvu de revêtement.

4. Système capteur selon la revendication 2 ou 3,
dans lequel une tresse, qui forme l'électrode (12), est agencée directement autour de l'élément conducteur de lumière (10), laquelle laisse dégagées des zones de surface régulières de l'élément conducteur de lumière (10).

5. Système capteur selon l'une des revendications précédentes,
dans lequel l'électrode (12) forme un élément d'écartement entre l'élément conducteur de lumière (10), lequel est dépourvu de revêtement, et l'enveloppe.

6. Système capteur selon l'une des revendications précédentes,
dans lequel l'électrode (12) est mise en contact avec une virole (27) à l'extrémité de l'élément capteur optique.

7. Système capteur selon l'une des revendications précédentes,
dans lequel il est prévu une seconde électrode (14) qui, à titre d'électrode d'émission, est reliée à la source de tension (24) et se trouve à l'opposé de la première électrode (12), qui forme une électrode de réception et est reliée à la seconde unité d'évaluation (20A), dans lequel l'une des deux électrodes (12, 14) est intégrée dans une paroi de l'enveloppe en forme de tuyau souple (9).

8. Système capteur selon la revendication 7,
dans lequel les deux électrodes (12, 14) sont intégrées dans la paroi de l'enveloppe (9), et l'élément capteur optique (10) est guidé à travers une cavité dans l'enveloppe (9).

9. Système capteur selon la revendication 7 ou 8,
dans lequel l'une au moins des électrodes (12, 14) est noyée par coextrusion dans l'enveloppe (9).

10. Système capteur selon l'une des revendications précédentes, dans lequel une ligne d'alimentation (42) pour la source de lumière (31) est également intégrée dans l'enveloppe (9), et la ligne d'alimentation (42) pour la source de lumière (31) forme également ladite au moins une électrode.

11. Système capteur selon la revendication 1,
dans lequel l'élément conducteur de lumière (10) est en un matériau conducteur et forme simultanément l'électrode.

12. Système capteur selon la revendication 1,
dans lequel l'enveloppe (9) est en un matériau conducteur et forme simultanément l'électrode.

13. Système capteur selon l'une des revendications précédentes,
dans lequel l'enveloppe (9) est un élément d'étanchement pour un élément de fermeture, comme par exemple une porte (2).

14. Système capteur selon la revendication 1,
dans lequel l'enveloppe (9) est un profilé d'étanchement pour une porte de véhicule automobile (2), et un tuyau protecteur (40) est noyé dans l'enveloppe, dans lequel une fibre optique est guidée de manière libre, à titre d'élément conducteur de lumière (10), dans lequel l'électrode s'étend le long du tuyau protecteur (40).

15. Procédé pour la surveillance d'un mécanisme de fermeture à l'égard d'un éventuel coincement d'un objet entre deux parties (2, 4) mobiles l'une par rapport à l'autre du mécanisme de fermeture à l'aide du système capteur selon l'une des revendications 1 à 14, dans lequel le mécanisme de fermeture est surveillé parallèlement aussi bien à l'aide du capteur de pression optique qu'à l'aide du capteur électrique.
